# EUROPEAN PATENT APPLICATION

(11) **EP 3 530 419 A1**
(43) Date of publication of application: **28.08.2019**
(21) Application number: 18157901.2
(22) Date of filing: 21.02.2018
(51) Int. Cl.: B25J 9/16, G05B 19/404

(54) **ACTIVELY DAMPED ROBOT**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A robotic system comprising: a multi-axis robot (100); one or more sensors (206, 208, 210) located on the multi-axis robot (100); a damping system (150) configured to apply a resistive force to the multi-axis robot (100), thereby to resist movement of the multi-axis robot (100); and a controller (204) coupled to the one or more sensors (206, 208, 210) and the damping system (150), the controller (204) being configured to: receive sensor measurements from the one or more sensors (206, 208, 210); and control, based on the received sensor measurements, the damping system (150) thereby to control the resistive force applied by the damping system (150) to the multi-axis robot (100).

## Description

### FIELD OF THE INVENTION

The present invention relates to robotic systems, and more particularly to the damping of vibration, deflection, and the like in robotic systems.

### BACKGROUND

In the field of aircraft construction, high accuracy is required for certain manufacturing processes including drilling, machining, and fastening functions.

Multi-axis robots, which are also referred to as robot arms, having end effectors, such as machining or drilling tools, may be used to perform many manufacturing processes. It tends to be possible to control a multi-axis robot to position its end effector with a high degree of repeatability and accuracy, e.g., by augmenting the robot with additional sensors.

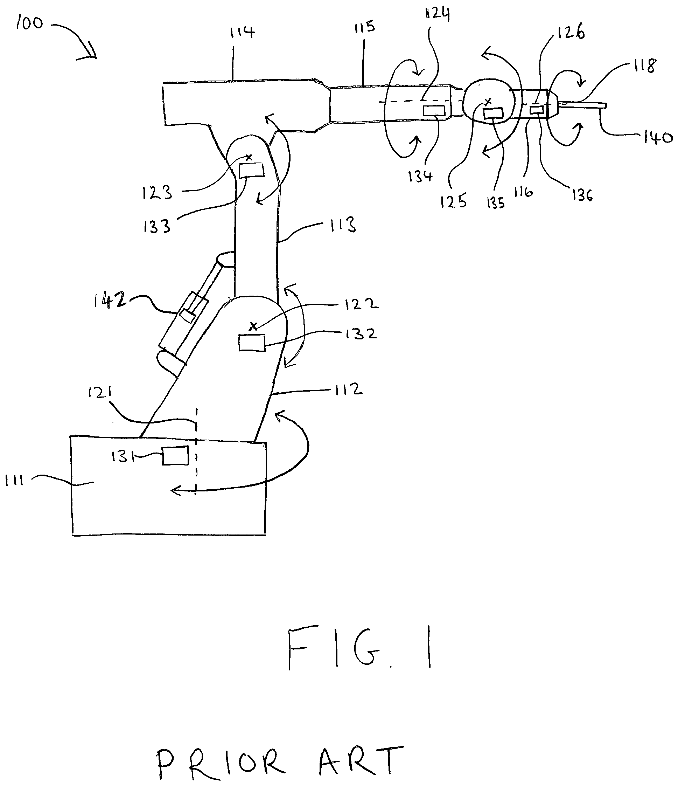

Figure 1 is a schematic illustration (not to scale) showing an example conventional manufacturing robot, or robot arm, 100.

In this example, the robot 100 comprises six arm portions, namely a first portion 111, a second portion 112, a third portion 113, a fourth portion 114, a fifth portion 115, and sixth portion 116. The robot 100 includes a first rotary axis 121, a second rotary axis 122, a third rotary axis 123, a fourth rotary axis 124, a fifth rotary axis 125, and a sixth rotary axis 126. The robot 100 further comprises a first motor 131, a second motor 132, a third motor 133, a fourth motor 134, a fifth motor 135, and a sixth motor 136, which separately operate a respective axis 121-126, i.e. the first motor 131 controls rotation about the first axis 121, the second motor 132 controls rotation about the second axis 122, and so on.

The operation of the individual axes 121-126 allows the robot's end effector 140 to be repeatably and accurately positioned with respect to a workpiece. Roll, pitch and yaw of the end effector 140 also tend to be controllable.

The robot 100 is controlled by a controller (not shown in Figure 1). More specifically, a controller controls operation of the motors 131-136 to move the robot 100. Also, the controller controls the end effector 140.

In this example, a counterbalance 142 is coupled between the second and third portions 112, 113. The counterbalance 142 may, for example, be a hydraulic damper or a gas spring. The counterbalance 142 comprises a piston operating within a cylinder containing a pressurized fluid, i.e. a liquid or gas.

The counterbalance 142 acts to support the weight of the robot 100 in operation, thereby to improve control of the robot 100.

### SUMMARY OF THE INVENTION

The present inventors have realised that the mechanical structures of conventional manufacturing robots, such as the robot 100, tend to vibrate during some machining operations, for example those involved in the construction of aircraft. Such vibrations can detrimentally affect end part surface quality and robot integrity, causing premature wear or even breaking of the cutting tool and reducing the service life of the robot.

The present inventors have further realised that passive counterbalances, such as that shown in Figure 1, tend to be insufficient in damping/controlling unwanted vibrations of the robot caused by dynamic machining forces experienced, for example during machining operations involved in the construction of aircraft. In other words, passive counterbalances tend to be ineffective when the dynamic parameters of the robot vary. Passive counterbalances tend to be particularly ineffective in robot machining applications in which high accuracy is desirable and when the robot is being used to machine a hard, solid surface.

The present inventors have further realised that active damping may be used to damp unwanted vibrations and reaction against dynamic forces of the robot caused by dynamic machining forces in lieu of or in addition to a passive counterbalance unit. In other words, the present inventors have realised that actively damping the vibrations of an end effector/robot by responding to the varying conditions experienced by the robot such as temperature, vibration and strain, is advantageous.

In a first aspect, the present invention provides a robotic system comprising: a multi-axis robot; one or more sensors located on the multi-axis robot; a damping system configured to apply a resistive force to the multi-axis robot, thereby to resist movement of the multi-axis robot; and a controller coupled to the one or more sensors and the damping system. The controller is configured to: receive sensor measurements from the one or more sensors; and control, based on the received sensor measurements, the damping system thereby to control the resistive force applied by the damping system to the multi-axis robot.

The one or more sensors may comprise one or more sensors selected from the group of sensors consisting of: vibration sensors, strain gauges, and temperature sensors. The one or more sensors may comprise one or more vibration sensors located proximate to one or more axes of the multi-axis robot. The one or more sensors may comprise one or more strain gauges located remotely from the axes of the multi-axis robot.

The robotic system may further comprise one or more motors operable to move the multi-axis robot, and the one or more sensors may comprise one or more temperature sensors located proximate to the one or more motors.

The damping system may comprise a hydraulic damper or gas spring.

The robotic system may comprise a pump for pumping a fluid to the damping system. The controller may be configured to control, based on the received sensor measurements, the pump so as to pump the fluid to the damping system thereby to vary the resistive force applied by the damping system to the multi-axis robot.

The robotic system may comprise one or more motors operable to move the multi-axis robot. The controller may be configured to control, based on the received sensor measurements, operation of the one or more motors.

The robotic system may comprise an end effector connected to the multi-axis robot. The end effector may comprise a cutting tool. The controller may be configured to control the damping system to actively damp vibration of the end effector.

The multi-axis robot may have six rotary axes. The robotic system may be an aerospace component manufacturing system.

In a further aspect, the present invention provides a method of damping a multi-axis robot. The method comprising: measuring, by one or more sensors located on the multi-axis robot, one or more parameters of the multi-axis robot; and controlling, by a controller, based on sensor measurements taken by the one or more sensors, a damping system coupled to the multi-axis robot thereby to control a resistive force applied to the multi-axis robot by the damping system.

The controlling may comprise determining, by the controller, based on the sensor measurements, a resistive force to be applied to the multi-axis robot by the damping system, and controlling, by the controller, the damping system to apply the determined resistive force to the multi-axis robot.

The robotic system may be an aerospace component manufacturing system.

In a further aspect, the present invention provides a method of machining a workpiece to produce an aerospace component. The method comprises: controlling a multi-axis robot to move an end effector of the multi-axis robot into contact with the workpiece and to machine the workpiece; during the machining of the workpiece, measuring, by one or more sensors located on the multi-axis robot, one or more parameters of the multi-axis robot; and controlling, by a controller, using sensor measurements of the one or more sensors, a damping system coupled to the multi-axis robot, thereby to control a resistive force applied to the multi-axis robot by the damping system so as to actively damp vibration of the end effector during the machining of the workpiece.

In a further aspect, the present invention provides a method of damping a multi-axis robot, the method comprising: measuring, by one or more sensors located on the multi-axis robot, one or more parameters of the multi-axis robot; and controlling, by a controller, based on sensor measurements taken by the one or more sensors, a damping system coupled to the multi-axis robot thereby to control a resistive force applied to the multi-axis robot by the damping system.

The controlling may comprise determining, by the controller, based on the sensor measurements, a resistive force to be applied to the multi-axis robot by the damping system; and controlling, by the controller, the damping system to apply the determined resistive force to the multi-axis robot.

In a further aspect, the present invention provides a robotic system comprising: a multi-axis robot; one or more sensors located on the multi-axis robot; a damping system configured to apply a resistive force to the multi-axis robot; and a controller coupled to the one or more sensors and the damping system. The controller is configured to: receive sensor measurements from the one or more sensors; and control, based on the received sensor measurements, the damping system.

The systems and methods described herein may be for use in the manufacture of aerospace components, preferably metal or metal alloy aerospace components. More preferably, the systems and methods described herein are methods and systems of cutting an aerospace component, such as a metal or metal alloy aerospace component.

### BRIEF DESCRIPTION OF THE DRAWINGS

Figure 1 is a schematic illustration (not to scale) showing a conventional manufacturing robot; and
Figure 2 is a schematic illustration (not to scale) of a robot comprising an active damping system.

### DETAILED DESCRIPTION

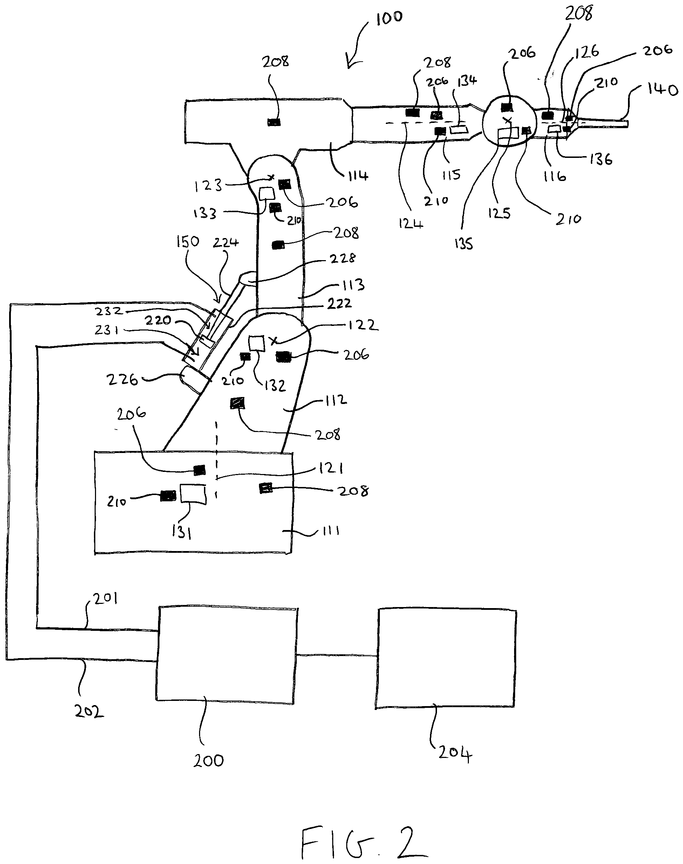

Figure 2 is a schematic illustration (not to scale) of an embodiment of a robotic system comprising the multi-axis robot 100 and an active damping system. The system may be for use in the manufacture of aerospace components such as metal or metal alloy (e.g. aluminium, titanium or alloys thereof) complex thin-wall aerospace components.

The robot 100 of the system is substantially the same as that shown in Figure 1 and described in more detail earlier above, and elements which are substantially the same as those of Figure 1 bear identical reference numerals thereto and descriptions thereof will be omitted.

In this embodiment, the active damping system for the robot 100 comprises a damper 150, a fluid pump 200, a first fluid line 201, a second fluid line 202, a controller 204, a plurality of vibration sensors 206, a plurality of strain gauges 208, and a plurality of temperature sensors 210.

In this embodiment, the damper 150 is coupled between the second and third portions 112, 113. The damper 150, which may be a hydraulic damper or gas spring, comprises a piston 220 operating within a cylinder 222 containing a pressurized fluid, i.e. a liquid or gas. The piston 220 is slidably mounted within the cylinder 222. A piston rod 224 is rigidly fixed to the piston 220, and extends through a bore at a first end of the cylinder 222. The damper 150 may comprise a seal mounted within the bore at the first end of the cylinder 222 which cooperates with the piston rod 224 to prevent escape of fluid from the cylinder 222. In this embodiment, the second portion 112 is attached to the cylinder 222 of the damper 150, via a first coupling mechanism 226, at or proximate to a second end of the cylinder 222, which is opposite to the first end. Also, the third portion 113 is attached to the end of the piston rod 224 that extends from the cylinder, via a second coupling mechanism 228.

The pump 200 is coupled to the damper 150 via the first and second fluid lines 201, 202 such that the pump 200 may pump fluid (e.g. a hydraulic fluid or a pressurised gas such as nitrogen) to or from the cylinder 222 of the damper 150 via the first and second fluid lines 201, 202. More specifically, the pump 200 is coupled to the cylinder 222 of the damper 150 at a first side of the piston 220 by the first fluid line 201 such that, in operation, the pump 200 may pump fluid into or out of a first chamber 231 within the cylinder 222 of the damper 150, the first chamber 231 being located at the first side of the piston 220. Also, the pump 200 is coupled to the cylinder 222 of the damper 150 at a second side of the piston 220 (which is opposite to the first side of the piston 220) by the second fluid line 202 such that, in operation, the pump 200 may pump fluid into or out of a second chamber 232 within the cylinder 222 of the damper 150, the second chamber 232 being located at the second side of the piston 220. The pump 200 is coupled to and controlled by the controller 204.

The damper 150 is configured to exert a force on the robot 100, thereby to resist movement of the robot 100. The magnitude of the resistive force applied to the robot 100 by the damper 150 is dependent on the fluid pressures in the first and second chambers of the damper 150.

Each vibration sensor 206 is mounted at a different respective location on the robot 100. Preferably, the vibration sensors 206 are located at or proximate to the axes 121-126 of the robot 100. The vibration sensors 206 are configured to measure local vibration of the robot 100. The vibration sensors 206 are coupled to the controller 204 such that vibration measurements taken by the vibration sensors 206 are sent to the controller 204.

Each strain gauge 208 is mounted at a different respective location on the robot 100. Preferably, the strain gauges 208 are located on the structural portions 111-116 of the robot 100, remote or spaced apart from the axes 111-116. The strain gauges 208 are configured to measure local strains in the robot 100, which may be indicative of deflection of the portions 111-116 of the robot 100. The strain gauges 208 are coupled to the controller 204 such that strain measurements taken by the strain gauges 208 are sent to the controller 204.

Each temperature sensor 210 is mounted at a different respective location on the robot 100. Preferably, the temperature sensors 210 are located at or proximate to the motors 131-136. The temperature sensors 210 are configured to measure temperatures of different parts of the robot 100, e.g. of the motors 131-136 of the robot 100. The temperature sensors 210 are coupled to the controller 204 such that temperature measurements taken by the temperature sensors 210 are sent to the controller 204.

The controller 204 is configured to receive sensor measurements from the plurality of vibration sensors 206, the plurality of strain gauges 208, and the plurality of temperature sensors 210. The sensor measurements are the controller's input variables. The controller 204 is further configured to process the received sensors measurements to determine an amount and/or a pressure of fluid that is to be contained within the first and second chambers 231, 232 of the cylinder 222 of the damper 150, e.g. in order to damp or react against unwanted movement of the robot 100 (such as vibrational motion and/or deflection currently being experienced by the robot 100). In some embodiments, the controller 204 may be configured to, instead of or in addition to determining an amount and/or a pressure of fluid that is to be contained within the first and second chambers 231, 232, process the received sensors measurements to determine a pressure differential between the first and second chambers 231, 232. The controller 204 is further configured to control the pump 200 to pump fluid (e.g. a hydraulic liquid, or a gas) into/out of the first and second chambers 231, 232 of the cylinder 222 of the damper 150 such that the chambers 231, 232 contain the amount or pressure of fluid determined by the controller 204, and/or such that the determined pressure differential is realised.

For example, in some embodiments, the controller 204 determines, based on one or more of the received sensor measurements, a resistive force to apply to the robot 100 to damp the vibrations and deflections being experienced by the robot 100 (which may be being caused by dynamic machining forces). The controller 204 may also determine fluid pressures in the first and second chambers 231, 232 of the cylinder 222 and/or a pressure differential therebetween that would result in the determined resistive force being applied to the robot 100. The controller 204 then controls the pump 200 to pump fluid to/from the first and/or second chambers 231, 232, thereby to realise the determined pressures or pressure differential. Thus, the damper 150 is adapted to apply the determined resistive force to the robot 100, thereby to damp the vibrations and deflections being experienced by the robot 100.

The controller 204 may be configured to increase the resistance of the damper 150 if the vibration sensors 206 indicate an increase in vibration of the robot 100 during use, e.g. if the vibration sensors 206 indicate vibration above a threshold level. Similarly, the controller 204 may be configured to decrease the resistance of the damper 150 if the vibration sensors 206 indicate low levels of vibration of the robot 100 during use, e.g. if the vibration sensors 206 indicate vibration below a threshold level. This tends to ensure compliance with robot path motion and reduce or eliminate the likelihood of the motors 131-136 being overloaded or fighting the damper 150.

The controller 204 may be configured to increase the resistance of the damper 150 if the strain gauges 208 indicate an increase in deflection of the robot 100 during use, e.g. if the strain gauges 208 indicate bending above a threshold level. Similarly, the controller 204 may be configured to decrease the resistance of the damper 150 if the strain gauges 208 indicate low levels of deflection of the robot 100 during use, e.g. if the strain gauges 208 indicate bending below a threshold level. Resistance may also be controlled to support the mass of the robot.

The controller 204 may be configured to increase the resistance of the damper 150 if the temperature sensors 210 indicate that the motors 131-136 are operating below a threshold temperature. Similarly, the controller 204 may be configured to decrease the resistance of the damper 150 if the temperature sensors 210 indicate that the motors 131-136 are operating above a threshold temperature. This tends to ensure compliance with robot path motion and reduce or eliminate the likelihood of the motors 131-136 being overloaded or fighting the damper 150.

Thus, the controller 204 is particularly configured to control the active damper 150 so that the undesirable operation and unwanted movement of the robot 100, such as excessive vibration and/or deflection, is reduced (and more preferably minimized). The controller 204 may be, for example, a PID-controller, a PD controller, or a PI-controller.

The above described active damping system for the robot advantageously tends to allow for the application of variable damping and resistance to the robot. The damping system of the robot tends to be tuneable to the load being handled by the robot. This load may result from the action of machining. This tunability tends to enable undesirable influences to component accuracy and surface finish to be reduced or eliminated.

The active damping system may advantageously react to changes, both in magnitude and direction, of the machining forces experienced by the robot during use.

Advantageously, the above described active damping system for the robot advantageously tends to improve contact between the end effector/machining (e.g. cutting) tool of the robot and the workpiece during the machining of that workpiece. This advantageously tends to provide improved surface finish and machining accuracy. Also, this tends to improve machining efficiency by allowing for a greater depth of cut to be accurately made through greater system rigidity.

Apparatus, including the controller 204, for implementing the above arrangement may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine-readable storage medium such as computer memory, a computer disk, ROM, PROM etc., or any combination of these or other storage media.

In the above embodiments, the robot is a six-axis robot. However, in other embodiments the robot has a different number of rotary axes about which it may be controlled to move. The robot may also include a different number of motors, i.e. other than six motors, for moving the robot. Also, in some embodiments, the robot may include one or more linear axes along which the robot may be moved. For example, the robot may be mounted to a rail or track along which it may be slid. For example the robot may have from 2 to 10 rotary axes, motors and/or linear axes.

In the above embodiments, the damper is a hydraulic damper or gas spring. However, in other embodiments, the damper is a different type of damper, for example an electrical actuator (e.g. an electrical linear actuator).

In the above embodiments, the robot comprises a single active damper. However, in other embodiments, the robot comprises a plurality of active dampers (e.g. two or more active dampers). In some embodiments, the robot further comprises one or more passive dampers in addition to the one or more active dampers.

In the above embodiments, the damper is attached between the second and third portions of the robot. However, in other embodiments, one or more dampers is attached between a different pair of arm portions instead of or in addition to being attached between the second and third portions of the robot. For example, an active damper may be attached between the first and second portions, between the third and fourth portions, between the first and third portions, or between any other pair of portions.

In the above embodiments, the damper attaches together two portions. However, in other embodiments, a damper attaches together a different number of portions, for example three portions.

In the above embodiments, as shown in Figure 2, the robot comprises six vibration sensors. However, in other embodiments, the robot comprises a different number of vibration sensors, for example more than six vibration sensors.

In the above embodiments, as shown in Figure 2, the robot comprises strain gauges. However, in other embodiments, the robot comprises a different number of strain gauges, for example more than six strain gauges.

In the above embodiments, as shown in Figure 2, the robot comprises six temperature sensors. However, in other embodiments, the robot comprises a different number of vibration sensors, for example more than six temperature sensors.

In the above embodiments, the robot comprises a plurality of vibration sensors, strain gauges, and temperature sensors. However, in other embodiments, one or more of the sensors is omitted. For example, in some embodiments, one or more (e.g. all) of the temperature sensors is omitted, and the controller controls the resistance applied by the damper using some or all of the measurements taken by the vibration sensors and the strain gauges only.

In some embodiments, the robot comprises one or more different types of sensor instead of or in addition to one or more of the vibration sensors, the strain gauges, and the temperature sensors. The controller may use measurements taken by the one or more of the different types of sensor to control the active damper. For example, the robot may include a pressure sensor configured to measure pressure of the fluid in the first chamber of the damper, a pressure sensor configured to measure pressure of the fluid in the second chamber of the damper, a pressure sensor configured to measure pressure of the fluid in the first fluid line, a pressure sensor configured to measure pressure of the fluid in the second fluid line, a flow rate sensor configured to measure a flow rate of the fluid in the first fluid line, and/or a flow rate sensor configured to measure a flow rate of the fluid in the second fluid line. The controller may control the active damper based on measurements taken by one or more of the pressure and flow rate sensors.

In some embodiments, the controller controls the active damper based on one or more different measurements instead of or in addition to those mentioned earlier above. For example, in some embodiments, the controller controls the active damper based on an amp draw of one or more of the motors.

In some embodiments, the controller may use measurements taken by one or more of the vibration sensors, one or more of the strain gauges, and/or one or more of the temperature sensors to control the motors.

## Claims

1. A robotic system comprising:
a multi-axis robot;
one or more sensors located on the multi-axis robot;
a damping system configured to apply a resistive force to the multi-axis robot, thereby to resist movement of the multi-axis robot; and
a controller coupled to the one or more sensors and the damping system, the controller being configured to:
receive sensor measurements from the one or more sensors; and
control, based on the received sensor measurements, the damping system thereby to control the resistive force applied by the damping system to the multi-axis robot.

2. The robotic system of claim 1, wherein the one or more sensors comprise one or more sensors selected from the group of sensors consisting of: vibration sensors, strain gauges, and temperature sensors.

3. The robotic system of claim 1 or 2, wherein the one or more sensors comprise one or more vibration sensors located proximate to one or more axes of the multi-axis robot.

4. The robotic system of any of claims 1 to 3, wherein the one or more sensors comprise one or more strain gauges located remotely from the axes of the multi-axis robot.

5. The robotic system of any of claims 1 to 4, wherein the robotic system further comprises one or more motors operable to move the multi-axis robot, and the one or more sensors comprise one or more temperature sensors located proximate to the one or more motors.

6. The robotic system of any of claims 1 to 5, wherein the damping system comprises a hydraulic damper or gas spring.

7. The robotic system of any of claims 1 to 6, further comprising a pump for pumping a fluid to the damping system, wherein the controller is configured to control, based on the received sensor measurements, the pump so as to pump the fluid to the damping system thereby to vary the resistive force applied by the damping system to the multi-axis robot.

8. The robotic system of any of claims 1 to 7, wherein the robotic system comprises one or more motors operable to move the multi-axis robot, and the controller is configured to control, based on the received sensor measurements, operation of the one or more motors.

9. The robotic system of any of claims 1 to 8, further comprising an end effector connected to the multi-axis robot, the end effector comprising a cutting tool.

10. The robotic system of claim 9, wherein the controller is configured to control the damping system to actively damp vibration of the end effector.

11. The robotic system of any of claims 1 to 10, wherein the multi-axis robot has six rotary axes.

12. The robotic system of any of claims 1 to 11, wherein the robotic system is an aerospace component manufacturing system.

13. A method of damping a multi-axis robot, the method comprising:
measuring, by one or more sensors located on the multi-axis robot, one or more parameters of the multi-axis robot; and
controlling, by a controller, based on sensor measurements taken by the one or more sensors, a damping system coupled to the multi-axis robot thereby to control a resistive force applied to the multi-axis robot by the damping system.

14. The method of claim 13, wherein the controlling comprises:
determining, by the controller, based on the sensor measurements, a resistive force to be applied to the multi-axis robot by the damping system; and
controlling, by the controller, the damping system to apply the determined resistive force to the multi-axis robot.

15. A method of machining a workpiece to produce an aerospace component, the method comprising:
controlling a multi-axis robot to move an end effector of the multi-axis robot into contact with the workpiece and to machine the workpiece;
during the machining of the workpiece, measuring, by one or more sensors located on the multi-axis robot, one or more parameters of the multi-axis robot; and
controlling, by a controller, using sensor measurements of the one or more sensors, a damping system coupled to the multi-axis robot, thereby to control a resistive force applied to the multi-axis robot by the damping system so as to actively damp vibration of the end effector during the machining of the workpiece.
